# FASCICULE DE BREVET EUROPEEN

(11) **EP 0 509 940 B1**
(45) Date de publication et mention de la délivrance du brevet: **13.03.1996**
(21) Numéro de dépôt: 92420123.9
(22) Date de dépôt: 14.04.1992
(51) Int. Cl.: C09K 3/14, C04B 35/657

(54) **Procédé de fabrication de produits abrasifs et/ou réfractaires à base d oxynitrures, fondus et solidifiés**
Verfahren zur Herstellung von Schleif- und/oder tonerfesten Produkten auf der Basis von geschmolzenen und verfestigten Oxynitriden
Process for the preparation of abrasive- and/or refractory products based on melted and solidified products

(30) Priorité: 15.04.1991 FR 9105419
(43) Date de publication de la demande: 21.10.1992
(73) Titulaire: PECHINEY ELECTROMETALLURGIE, F-92400 Courbevoie (FR)
(72) Inventeur: Dubots, Dominique, F-74190 Passy (FR); Faure, Pierre, F-38210 St Quentin sur Isere (FR)
(74) Mandataire: Mougeot, Jean-Claude

(56) Documents cités:
- EP-A- 0 168 295
- EP-A- 0 273 569
- EP-A- 0 332 541
- DE-A- 3 535 912
- FR-A- 2 333 761
- FR-A- 2 512 012

## Description

### DOMAINE TECHNIQUE

L'invention concerne un procédé de fabrication de produits abrasifs et/ou réfractaires fondus et solidifiés à base d'oxynitrures, d'un ou plusieurs métaux ou métalloïdes.

### ETAT DE LA TECHNIQUE

On connaît des céramiques à base de nitrures, d'oxynitrures, qui peuvent être également utilisées comme réfractaires, mais celles-ci sont obtenues par mélange des poudres constitutives (par exemple oxydes et nitrures), mise en forme et frittage ou frittage-réaction, naturel ou sous pression. Ces procédés sont difficiles à mettre en oeuvre et la réaction entre les poudres du mélange est parfois lente et/ou difficile à initier, ce qui peut conduire à des produits ayant des caractéristiques insuffisantes.

EP-A-0 332 541 décrit un matériau polyphasé à base d'alumine, dans lequel on a incorporé du carbone et de l'azote, de manière à obtenir une structure du type "composite-in-situ" où, dans la matrice d'alumine, sont dispersées des phases d'oxycarbure, d'oxynitrure et d'oxycarbonitrure d'aluminium.

EP-A-0 273 569 décrit que l'oxynitrure d'aluminium AlON est fabriqué sous forme d'une poudre obtenue par un procédé sol-gel, puis aggloméré par frittage réactif sans pression.

### OBJET DE L'INVENTION

Compte tenu de son expérience la demanderesse a mis au point un procédé de fabrication de produits abrasifs et/ou réfractaires contenant au moins 50% d'un oxynitrure d'un ou de plusieurs métaux ou métalloïdes, consistant à préparer une charge initiale solide constituée d'au moins un composé desdits métaux ou métalloïdes contenant de l'oxygène et de l'azote, comme les oxydes, les nitrures ou les oxynitrures, à fondre cette charge pour former une mousse liquide à refroidir cette mousse liquide et à la solidifier sous la forme du produit souhaité.

On constate en effet de façon inattendue, que les oxynitrures présentent une stabilité chimique suffisante pour être fondus alors que les nitrures correspondants se décomposent souvent avant de fondre.

Les produits fabriqués selon l'invention contiennent généralement au moins 5% d'azote et 5% d'oxygène, au moins 50% d'oxynitrure.

Les éléments, métaux ou métalloïdes, capables de rentrer dans la composition desdits composés concernés par l'invention sont en particulier Al, Mg, mais aussi les alcalino-terreux (Ca, Sr, Ba), Si, Ti, Zr, ou encore plus généralement les éléments de transition des colonnes 3a, 4a, 5a, 6a (version IUPAC) dans les lignes 4, 5, 6 de la classification périodique des éléments, y compris les terres rares, et également B quand au moins un autre des éléments précédents est déjà présent.
Lesdits composés peuvent être des oxynitrures simples, c'est-à-dire ne comportant qu'un seul des éléments venant d'être cités, ou bien mixtes, quand ils comportent deux ou plusieurs desdits éléments, donnant ainsi des dispersions de plusieurs phases l'une dans l'autre, des alliages, des solutions solides, des combinaisons, etc...

Il est évident que parmi la grande variété de produits abrasifs ou réfractaires obtenus selon l'invention, on pourra sélectionner les compositions les plus adaptées à l'usage envisagé compte tenu de leurs propriétés ou combinaisons de propriétés : réfractarité, tenue à la température, à l'abrasion, à la corrosion (par exemple à chaud en présence de métal liquide), inertie chimique, faible mouillabilité, résistivité électrique ou conductivité thermique, frittabilité, compatibilité avec des liants ou résines, etc...

Les produits fabriqués selon le procédé de l'invention résultent de la fusion d'une charge solide initiale constituée d'un ou plusieurs des composés du type oxydes, nitrures, oxynitrures, auxquels on peut ajouter des carbures et/ou des borures, d'un ou plusieurs éléments (métaux ou métalloïdes), suivie de leur solidification par refroidissement. En particulier les oxynitrures simples ou mixtes peuvent être fondus et solidifiés tels quels sans mélange préalable avec un autre desdits composés. Parmi ces composés constituant tout ou partie de la charge de départ, on peut noter non limitativement : Al₂O₃, MgO, AlN, Al₃O₃N, Al₃MgO₄, Mg₃N₂, Al₄C₃, B₄C, BN, Si₃N₄, etc...

La composition globale de la charge de départ peut correspondre par ailleurs à l'obtention de composés définis, comme Al₃O₃N ..., mais peut également couvrir des gammes beaucoup plus larges, pour obtenir soit des mélanges de plusieurs phases solides, soit des solutions solide telles que les sialons du type Si_{6-z} Al_{z}O_{z}N_{8-z}, les alons du type Al_{(8-x)/3} O₄₋ₓ Nₓ, des spinelles de magnésie et d'alon, etc...

La charge initiale est généralement constituée de poudres ou produits plus ou moins frittés, préalablement obtenus par différents moyens connus. Par exemple, quand ladite charge initiale contient un oxynitrure métallique, ce dernier peut avoir été obtenu par une carbothermie nitrurante de l'oxyde métallique correspondant, ou plus avantageusement par une nitruration directe d'une poudre métallique en présence d'un support réfractaire (non fusible) dont la nature chimique est choisie en fonction de l'oxynitrure souhaité.

Un moyen pratique et intéressant d'obtenir des températures suffisamment élevées, généralement supérieures à 2000°C, pour réaliser la fusion de la charge initiale solide, est d'utiliser une fusion électrothermique dans un four à arc.
Un autre moyen d'obtenir la fusion est d'introduire, sous forme solide, au moins un des composants de la charge initiale dans un bain déjà fondu constitué des autres composants de la charge initiale.

La fusion permet d'obtenir des combinaisons chimiques, par réaction entre les différents composés de la charge initiale, qui lors du refroidissement feront apparaître les phases souhaitées.

Avant solidification, les produits fondus peuvent être coulés et on peut leur donner toutes les configurations possibles : blocs, granulés, pièces de forme, etc... Il est possible aussi de les mettre sous forme de poudre broyée, ou concassée, et tamisée.

Le refroidissement peut être rapide (trempe) de façon à conserver une structure de grains fins dans le produit final, en évitant la présence de phases cristallines de grandes dimensions, et à conserver de bonnes caractéristiques dans le produit final (par exemple résistance au choc thermique). Ainsi la taille des grains est typiquement inférieure à 100 µm.

Les produits fondus et solidifiés fabriqués selon le procédé de l'invention peuvent être mélangés, à l'état de poudre ou de particules, avec d'autres composés d'addition (également sous forme de poudre ou de particules). Ces composés d'addition peuvent être tout d'abord des abrasifs ou réfractaires, électrofondus ou non, par exemple des oxydes ou des composés oxydés (notamment des oxydes réfractaires comme Al₂O₃, MgO, les oxydes alcalino-terreux, la dolomie calcinée, les spinelles, SiO₂, ZrO₂, TiO₂ , les oxydes de terres-rares), des carbures (comme ceux de Si, Al, Ca, B...), des borures (comme ceux d'Al, Ti, Zr), des nitrures (comme ceux d'Al, Si, Ti, Zr, B), des oxynitrures (comme les sialons, les alons), des oxycarbures (comme ceux d'Al), mais encore des métaux ou métalloïdes en poudre ou particules (en particulier C, Al, Mg, Ca, Si ou leurs alliages) ne réagissant pas avec les autres composés.

Les produits fondus et solidifiés fabriqués selon le procédé de l'invention ou leurs mélanges avec des composés d'addition venant d'être décrits peuvent être concassés et/ou réduits en poudre par broyage. Les poudres obtenues peuvent servir à faire toutes sortes de pièces de forme, notamment frittées, confectionnées par tous procédés connus, par exemple pressage, coulage, extrusion, en présence de liants, plastifiant, suivi d'un frittage naturel ou sous pression, HIP (Hot Isostatic Pressing)...

A titre d'illustration on peut citer quelques types de produits abrasifs ou réfractaires fabriqués selon le procédé de l'invention, donc obtenus après fusion et solidification.

On peut ainsi préparer :
- des oxynitrures simples, obtenus par exemple après fusion d'une charge d'oxynitrure pulvérulente plus ou moins frittée préalablement obtenue selon les procédés cités plus haut, ou d'une charge de nitrure et d'oxyde du même élément, ou encore d'une charge d'oxynitrure enrichie en nitrure et/ou en oxyde toujours du même métal.
- des oxynitrures mixtes, obtenus par exemple après fusion d'une charge d'oxynitrures d'éléments différents, ou de nitrures et d'oxydes d'éléments différents, ou de nitrure et d'oxynitrures d'éléments différents, ou d'oxynitrures et d'oxydes d'éléments différents, ou d'oxynitrures mixtes enrichis en nitrures et/ou oxydes...
- des oxycarbonitrures, obtenus par exemple après fusion d'une charge d'oxynitrure et de carbure avec addition éventuelle de nitrure, d'oxyde voire d'oxycarbure. Comme précédemment on peut n'être en présence que d'un seul élément (oxycarbonitrure simple) ou de plusieurs éléments (oxycarbonitrure mixte).

### EXEMPLES

### Exemple 1

Cet exemple illustre l'obtention d'un oxynitrure simple Al₃O₃N enrichi en Al₂O₃, selon l'invention.

On introduit dans un four triphasé à arc une charge initiale constituée du mélange de poudres suivant :
80% (poids) d'alumine provenant d'un procédé Bayer
20% (poids) d'oxynitrure Al₃O₃N fritté.
La charge est fondue à 2100°C et coulée dans une lingotière en acier remplie de boulets également en acier pour obtenir un effet de trempe énergique.
Le produit solidifié est séparé des boulets par criblage suivi d'un tri magnétique puis est conditionné de façon habituelle (broyage, criblage) pour obtenir les coupes granulométriques désirées.
L'analyse par diffractométrie aux rayons X du produit obtenu permet d'identifier une phase AlON dispersée dans une matrice qui est une solution solide d'AlON dans le corindon.
L'examen d'une section polie révèle une texture compacte très fine. L'opération de broyage mise en oeuvre lors du conditionnement confirme les qualités abrasives exceptionnelles du produit.
Compte tenu de sa composition , ses qualités réfractaires et abrasives sont au moins celles décrites par les céramistes pour les produits frittés analogues, de plus sa tenue à la corrosion est fortement améliorée.

### Exemple 2

Cet exemple illustre l'obtention d'un oxynitrure simple AION selon l'invention.

Dans le four de l'exemple 1 on introduit une charge constituée de 100% d'AlON fritté; comme précédemment le produit est fondu vers 2200°C sans que l'on note de trace de décomposition; il s'écoule très facilement lors du basculement du four.
Le produit trempé est conditionné de la même façon que celui de l'exemple 1. Ses caractéristiques abrasives et réfractaires sont très semblables à celles du produit décrit dans l'exemple 1.

### Exemple 3

Cet exemple illustre l'obtention d'un oxynitrure mixte du type MgAlON, selon l'invention.

Dans le four de l'exemple 1 on introduit une charge constituée de :
50% (poids) de magnésie d'eau de mer (Dead Sea Periclase)
50% (poids) d'AlON fritté.
La charge est fondue vers 2500°C. La coulée du contenu du four est effectuée rapidement pour éviter tout risque de figeage. Après conditionnement du produit trempé, solidifié, refroidi, l'identification des phases révèle un produit biphasé à texture compacte et fine constituée :
- d'un spinelle d'AlON (structure proche du spinelle classique MgO-Al₂O₃)
- de périclase dont le décalage des raies de diffractométrie indique une solution solide.
Ce produit s'avère posséder une inertie chimique exceptionnelle et inattendue dans les sels fondus de lithium et de bore et un comportement réfractaire tout aussi exceptionnel et inattendu.
Ce produit peut aussi être utilisé comme agent isolant électrique dans la fabrication des résistances électriques chauffantes blindées car il possède à la fois une bonne conductibilité thermique et une résistivité électrique très élevée. Pour cette application, il présente un avantage décisif sur la magnésie utilisée habituellement, car il conserve ses propriétés électriques à des températures pour lesquelles la magnésie perd ses propriétés d'isolant électrique (1300°C).

### Exemple 4

Cet exemple illustre l'obtention d'un oxynitrure mixte contenant du bore selon l'invention.

Dans le four de l'exemple 1 on introduit une charge constituée du mélange suivant :
45% (poids) d'alumine provenant d'un procédé Bayer
45% (poids) d'AlON
10% (poids) d'anhydride borique : B₂O₃.
On effectue la fusion et la coulée dans les conditions décrites dans l'exemple 1.
Au cours des opérations de conditionnement, notamment le broyage, on constate que le produit est un abrasif exceptionnel.
Le produit obtenu a une texture très fine et un examen de diffractométrie de rayons X montre qu'il est constitué d'une suspension de nitrure de bore hexagonal dans une matrice d'aluminalon du type de celle de l'Exemple 1.
En plus de ses propriétés abrasives, ce produit est un excellent réfractaire particulièrement adapté aux applications suivantes : réfractaires de coulée continue de l'acier et réfractaires destinés à contenir des alliages fondus d'aluminium.

### Exemple 5

Cet exemple illustre l'obtention d'un oxynitrure mixte du type MgCaAlON, selon l'invention.

Dans le four de l'exemple 1, on introduit la charge constituée du mélange suivant :
80% (poids) de dolomie (MgO-CaO)
20% (poids) d'AlON.
On effectue l'électrofusion et la coulée avec trempe comme précédemment. On obtient un produit à structure fine et l'analyse par diffractométrie de rayons X ne permet pas d'identifier facilement les phases du fait de la présence de composés non encore répertoriés dans les tables.
Lors d'un essai de réactivité à l'eau, il apparaît de façon inattendue et particulièrement intéressante que le produit ne présente aucune réaction bien que contenant des composés du calcium.
Ainsi, ce produit est un réfractaire qui peut se subsistuer aux dolomies avec l'avantage d'être inerte à l'humidité.

### Exemple 6

Cet exemple illustre l'obtention d'un oxycarbonitrure du type AlCON, selon l'invention.

Dans le four de l'exemple 1 on introduit une charge constituée du mélange suivant :
50% (poids) d'alumine Bayer
40% (poids) d'AlON, auquel on ajoute
20% (poids) de carbure d'aluminium Al₄C₃

On effectue l'électrofusion et la coulée avec trempe comme précédemment. Après conditionnement, l'analyse chimique du produit (compact à structure fine) donne les teneurs suivantes :
8% (poids) de carbone
15% (poids) d'azote.
Comme dans l'exemple 5 l'identification de toutes les phases n'est pas possible du fait de la présence de composés non encore répertoriés.
L'opération de broyage fait apparaître là encore un comportement abrasif, de ce produit, remarquable.

### Exemple 7

Cet exemple illustre tout d'abord l'obtention préalable d'un oxynitrure mixte fritté du type MgBON, puis l'obtention d'un produit réfractaire par fusion et solidification, selon l'invention.

Dans un premier temps, on introduit dans un four à chambre une charge constituée du mélange particulaire suivant :
30% (poids) d'anhydride borique B₂O₃
30% (poids) de MgO
40% (poids) de grenaille de Mg.
On chauffe alors le four sous atmosphère nitrurante (azote) pour opérer une nitruration exothermique à environ 1700°C et obtenir une masse frittée constituée de périclase et de nitrure de bore hexagonal. Cette masse frittée peut s'analyser comme résultant de la nitruration de Mg, suivie de la décomposition du nitrure de magnésium (Mg₃N₂ --> 3Mg +N₂), puis de la réduction de B₂O₃ (3Mg + B₂O₃ --> 3MgO + 2B) et de la nitruration du bore (2B + N₂ --> 2BN); on voit donc qu'un métalloïde (B) est formé in situ par réduction métallothermique de son oxyde (B₂O₃) par le magnésium provenant de la décomposition thermique à haute température de Mg₃N₂ formé à plus basse température.

Dans un deuxième temps, on introduit ladite masse frittée dans le four de l'exemple 1. On effectue la fusion vers 2800°C, puis coule rapidement, compte tenu de la température élevée utilisée.
Après solidification et conditionnement, l'analyse du produit par diffraction de rayons X, montre la présence :
- de périclase (MgO) avec des raies de diffraction légèrement décalées,
- de nitrure de bore hexagonal (BN) dispersé dans la matrice de périclase.

Ce produit peut avoir les applications suivantes :
- l'une réfractaire qui concerne les mêmes domaines d'emploi que les magnésies électrofondues (avec l'avantage de présenter une inertie aux métaux liquides encore améliorée et une non mouillabilité conférée par le nitrure de bore).
- l'autre concerne les domaines d'application où la magnésie est utilisée comme composé possédant une bonne conductivité thermique et une forte résistivité électrique. Là encore, la présence de nitrure de bore hexagonal bon conducteur de la chaleur et très bon isolant électrique à haute température se traduit par des performances exceptionnelles du produit selon l'invention.

### Exemple 8

Cet exemple illustre l'obtention, selon l'invention, d'un oxynitrure mixte du type AlTiON enrichi en Al₂O₃ à partir du corindon brun (Al₂O₃ + TiO₂).

Pour cela, dans le four de l'Exemple 1, on dispose d'une masse fondue de corindon brun (obtenue par fusion réductrice de bauxite), on coule cette masse et, dans le jet de coulée, on introduit une poudre broyée de AlON. Après solidification et conditionnement on obtient un produit réfractaire ayant des propriétés abrasives inattendues.
L'analyse par diffractométrie de rayons X révèle la présence d'une solution solide, de nitrure et d'oxynitrures de Ti.
Ainsi, les qualités abrasives supérieures de ce produit, vérifiées par une usure anormale des broyeurs, résultent :
- de la présence des nitrure et oxynitrure de Ti qui améliorent la tribologie de l'abrasif;
- de la structure fine pluriphasée du produit qui améliore ses caractéristiques mécaniques;
- de la mise en solution solide d'AlON dans la structure du corindon qui modifie favorablement les caractéristiques mécaniques de la matrice.

Les exemples décrits ne sont pas limitatifs et il est possible de préparer d'autres produits selon l'invention en utilisant d'autres mélanges initiaux :
- dans le cas des oxynitrures simples, on peut par exemple partir de mélanges AlN + Al₂O₃ (ou AlON)
- dans le cas des oxynitrures mixtes, on peut par exemple partir de mélanges
   AlN + MgO
   AlN + dolomie
   AlN + B₂O₃
   AlN + TiO₂ ces mélanges pouvant être enrichis avec Al₂O₃ et/ou Mg0, Ca0 ou d'autres oxydes, carbures ou nitrures.

Ainsi, les compositions des produits selon l'invention sont très variées, les structures sont également très diverses. On trouve par exemple des solutions solides, des composés définis bien cristallisés (tels que AlN, Al₃O₃N, BN (hexagonal)...), dispersés dans des matrices plus ou moins complexes (telles que MgO, Al₂O₃, leurs mélanges, des oxynitrures...), des solutions solides, etc...

Il est remarquable de noter que l'invention permet de disposer d'abrasifs ou réfractaires comportant des espèces chimiques qu'il serait difficile d'obtenir autrement; il en est ainsi par exemple des phases cristallisées finement dispersées de BN hexagonal (ou de TiN) dans des matrices d'oxynitrure ou d'oxycarbonitrure qui apparaissent sans qu'il ait été nécessaire de préparer préalablement BN (ou TiN) en tant que tels; lesdites phases de BN apportent des avantages notables notamment aux produits réfractaires en diminuant leur mouillabilité par les métaux liquides et en améliorant de ce fait leur tenue à l'abrasion, au colmatage ou à l'encrassement (par exemple quand ils sont utilisés comme buses de coulée de métaux liquides tels que les aciers, Al ...).

Il est également remarquable de noter qu'on peut obtenir des produits selon l'invention comportant des phases chimiques qui n'apparaissent que lors de la solidification.

## Revendications

1. Procédé de fabrication de produits abrasifs et/ou réfractaires contenant au moins 50% d'un oxynitrure d'un ou plusieurs métaux et métalloïdes, consistant à préparer une charge initiale solide constituée d'au moins un composé desdits métaux ou métalloïdes contenant de l'oxygène et de l'azote, comme les oxydes, les nitrures, ou les oxynitrures, à fondre cette charge pour former une masse liquide, à refroidir cette masse liquide et à la solidifier sous la forme du produit souhaité.

2. Procédé selon la revendication 1, caractérisé en ce lesdits métaux ou métalloïdes sont les éléments des colones 3a, 4a,5a,6a, (version IUPAC) dans les lignes 4, 5, 6 de la classification des éléments et de préférence Al, Mg, les alcalino-terreux (Ca, Sr, Ba), Si, Ti, Zr, ainsi que B quand au moins un autre desdits éléments est déjà présent.

3. Procédé selon l'une quelconque des revendications 1 ou 2 caractérisé en ce qu'on ajoute à la charge initiale des carbures et/ou des borures desdits métaux ou métalloïdes.

4. Procédé selon l'une quelconque des revendications 1 à 3 caractérisé en ce que la fusion est effectuée dans un four à arc.

5. Procédé selon l'une quelconque des revendications 1 à 3 caractérisé en ce que la fusion est obtenue par introduction desdits composés solides dans une charge desdits composés déjà fondus.

6. Procédé selon l'une quelconque des revendications 1 à 5, caractérisé en ce que le refroidissement est un refroidissement rapide ou une trempe.

7. Procédé selon l'une quelconque des revendications 3 à 6 caractérisé en ce que les produits fondus sont coulés avant refroidissement et solidification pour donner des pièces de forme, des blocs, ou des produits particulaires.

8. Procédé selon l'une quelconque des revendications 1 à 7 caractérisé en ce que lesdits produits abrasifs ou réfractaires sont sous forme de poudre broyée, ou concassée et tamisée.

9. Procédé selon l'une quelconque des revendications 1 à 8, caractérisé en ce que les produits obtenus après solidification sont mélangés à l'état de poudre ou de particules à d'autres composés d'addition.

10. Procédé selon la revendication 9 caractérisé en ce que les composés d'addition sont des oxydes, des composés oxydés, des carbures, des borures ou des produits obtenus selon l'invention, également à l'état de poudre ou particulaire.

11. Procédé selon la revendication 10 caractérisé en ce que les composés d'addition sont MgO, Al2O3, les oxydes alcalino-terreux, SiO2, ZrO2, TiO2, les oxydes de terres rares.

12. Procédé selon la revendication 10, caractérisé en ce que les composés d'addition sont des métaux ou métalloïdes en poudre, de préférence C, Al, Ca, Si.

13. Procédé selon l'une quelconque des revendications 8 à 12 caractérisé en ce que ladite poudre est mise en forme et frittée.

14. Procédé selon la revendication 3 caractérisé en ce que les composés dudit groupe contenus dans la charge initiale sont obtenus par nitruration directe d'une poudre d'un ou plusieurs éléments (métal ou métalloïde) en présence d'un support particulaire réfractaire.

15. Procédé selon la revendication 13 caractérisé en ce que le ou les éléments sont fabriqués in situ par métallothermie grâce à un métal provenant de la décomposition thermique d'un nitrure préalablement formé à basse température.

16. Procédé selon l'une quelconque des revendications 1 à 8 et 11, 12 caractérisé en ce que les produits obtenus ont une structure dont la taille de grain est inférieure à 100 µm,

## Patentansprüche

1. Verfahren zur Herstellung von Schleif- und/oder feuerfesten Erzeugnissen, die wenigstens 50 % eines Oxinitrids eines oder mehrerer Metalle und Metalloide enthalten, das darin besteht, eine feste Ausgangscharge bereitzustellen, die aus wenigstens einer Sauerstoff und Stickstoff enthaltenden Verbindung, wie den Oxiden, den Nitriden oder den Oxinitriden, dieser Metalle oder Metalloide besteht, diese Charge zur Bildung einer flüssigen Masse zu schmelzen, diese flüssige Masse abzukühlen und sie in Form des gewünschten Erzeugnisses erstarren zu lassen.

2. Verfahren nach dem Anspruch 1,
dadurch gekennzeichnet, daß
die Metalle oder Metalloide Elemente der Spalten 3a, 4a, 5a, 6a (IUPAC-Version) in den Linien 4, 5, 6 des periodischen Systems der Elemente und vorzugsweise Al, Mg, die Erdalkalien (Ca, Sr, Ba), Si, Ti, Zr sowie B bei Anwesenheit bereits wenigstens eines anderen der genannten Elemente sind.

3. Verfahren nach irgendeinem der Ansprüche 1 oder 2,
dadurch gekennzeichnet, daß
man der Ausgangscharge Karbide und/oder Boride der Metalle oder Metalloide zusetzt.

4. Verfahren nach irgendeinem der Ansprüche 1 bis 3,
dadurch gekennzeichnet, daß
das Schmelzen in einem Lichtbogenofen durchgeführt wird.

5. Verfahren nach irgendeinem der Ansprüche 1 bis 3,
dadurch gekennzeichnet, daß
das Schmelzen durch Einführen der festen Verbindungen in eine Charge der schon geschmolzenen Verbindungen erzielt wird.

6. Verfahren nach irgendeinem der Ansprüche 1 bis 5,
dadurch gekennzeichnet, daß
das Abkühlen ein rasches Abkühlen oder ein Abschrecken ist.

7. Verfahren nach irgendeinem der Ansprüche 3 bis 6,
dadurch gekennzeichnet, daß
die geschmolzenen Erzeugnisse vor dem Abkühlen und Erstarren gegossen werden, um Formteile, Blöcke oder besondere Erzeugnisse zu ergeben.

8. Verfahren nach irgendeinem der Ansprüche 1 bis 7,
dadurch gekennzeichnet, daß
die Schleif- oder feuerfesten Erzeugnisse in Form von gemahlenem oder grobzerkleinertem und gesiebtem Pulver sind.

9. Verfahren nach irgendeinem der Ansprüche 1 bis 8,
dadurch gekennzeichnet, daß
die nach dem Erstarren erhaltenen Erzeugnisse im Pulver-oder Teilchenzustand mit anderen Zusatzverbindung vermischt werden.

10. Verfahren nach dem Anspruch 9,
dadurch gekennzeichnet, daß
die Zusatzverbindungen Oxide, Oxidverbindungen, Karbide, Boride oder erfindungsgemäß erhaltene Erzeugnisse, ebenfalls im Pulver- oder Teilchenzustand sind.

11. Verfahren nach dem Anspruch 10,
dadurch gekennzeichnet, daß
die Zusatzverbindungen MgO, Al₂O₃, die Erdalkalioxide, SiO₂, ZrO₂, TiO₂, Seltenerdoxide sind.

12. Verfahren nach dem Anspruch 10,
dadurch gekennzeichnet, daß
die Zusatzverbindungen Metalle oder Metalloide als Pulver, vorzugsweise C, Al, Ca, Si, sind.

13. Verfahren nach irgendeinem der Ansprüche 8 bis 12,
dadurch gekennzeichnet, daß
das Pulver geformt und gesintert wird.

14. Verfahren nach dem Anspruch 3,
dadurch gekennzeichnet, daß
die in der Ausgangscharge enthaltenen Verbindungen der Gruppe durch direkte Nitrierung eines Pulvers aus einem oder mehreren Elementen (Metall oder Metalloid) in Gegenwart eines besonderen feuerfesten Trägers erhalten werden.

15. Verfahren nach dem Anspruch 13,
dadurch gekennzeichnet, daß
das oder die Element in situ durch Metallothermie dank eines Metalls hergestellt werden, das aus der thermischen Zersetzung eines vorab bei niedriger Temperatur gebildeten Nitrids stammt.

16. Verfahren nach irgendeinem der Ansprüche 1 bis 8 und 11, 12,
dadurch gekennzeichnet, daß
die erhaltenen Erzeugnisse eine Struktur haben, deren Korngröße unter 100 µm ist.

## Claims

1. Method of manufacture of abrasive and/or refractory products containing at least 50% of an oxynitride of one or more metals and metalloids, consisting of preparing an initial solid charge comprising at least one compound of said metals or metalloids containing oxygen and nitrogen, such as oxides, nitrides, or oxynitrides, of melting this charge to form a liquid mass, of cooling this liquid mass and of solidifying it in the form of the product desired.

2. Method according to claim 1, characterised in that said metals or metalloids are elements from columns 3a, 4a, 5a and 6a (IUPAC version) in lines 4, 5 and 6 of the Periodic Table of Elements, and preferably Al, Mg, alkaline earths (Ca, Sr, Ba) Si, Ti, Zr, and also B when at least one other of said elements is already present.

3. Method according to any one of claims 1 or 2, characterised in that carbides and/or borides of said metals or metalloids are added to the initial charge.

4. Method according to any one of claims 1 to 3, characterised in that fusion is carried out in an arc furnace.

5. Method according to any one of claims 1 to 3, characterised in that fusion is obtained by introduction of said solid compounds into an already molten charge of said compounds.

6. Method according to any one of claims 1 to 5, characterised in that the cooling is rapid cooling or quenching.

7. Method according to any one of claims 3 to 6, characterised in that the molten products are cast before cooling and solidifying to produce shaped pieces, blocks or particulate products.

8. Method according to any one of claims 1 to 7, characterised in that said abrasive or refractory products are in the form of ground or crushed and sieved powder.

9. Method according to any one of claims 1 to 8, characterised in that the products obtained after solidifying are mixed, in powder or particle state, with other addition compounds.

10. Method according to claim 9, characterised in that the addition compounds are oxides, carbides, borides or products obtained according to the invention which are also in a powder or particulate state.

11. Method according to claim 10, characterised in that the addition compounds are MgO, Al₂O₃, alkaline earth oxides, SiO₂, ZrO₂, TiO₂ or rare earth oxides.

12. Method according to claim 10, characterised in that the additive compounds are powdered metals or metalloids, preferably C, Al, Ca, Si.

13. Method according to any one of claims 8 to 12, characterised in that said powder is shaped and sintered.

14. Method according to claim 3, characterised in that the compounds of said group contained in the initial charge are obtained by direct nitriding of a powder of one or more elements (metal or metalloid) in the presence of a particulate refractory carrier.

15. Method according to claim 13, characterised in that the element or elements are produced *in situ* by virtue of a metallothermal process resulting from the thermal decomposition of a nitride previously formed at low temperature.

16. Method according to any one of claims 1 to 8 and 11, 12, characterised in that the products obtained have a structure, the grain size of which is less than 100µm.
